# EUROPEAN PATENT APPLICATION

(11) **EP 3 572 639 A1**
(43) Date of publication of application: **27.11.2019**
(21) Application number: 19173643.8
(22) Date of filing: 09.05.2019
(51) Int. Cl.: F02C 6/06, F02C 6/08, F04D 27/02

(54) **APPARATUS FOR SELECTIVE DELIVERY OF PRESSURISED GAS**

(30) Priority: 25.05.2018 GB 201808659
(71) Applicant: Rolls-Royce plc, London SW1E 6AT (GB)
(72) Inventor: Thomas, Hugh, Derby, Derbyshire DE24 8BJ (GB)
(74) Representative: Rolls-Royce plc

(57) **Abstract**

Apparatus (150) for selective delivery of pressurised gas comprises a containment wall (129) which at least partially bounds of a volume of pressurised gas during use of the apparatus, and a valve (144) directly coupled to an output port (136) of the containment wall such that the containment wall and the valve retain the pressurised gas when the valve is closed. The apparatus obviates the need for a duct coupling the output port to the input of the valve, and hence reduces the number of interfaces between the output port and the input of the valve from two, as in arrangements of the prior art, to one. The apparatus presents fewer failures modes compared to the case where a duct couples the output port to the valve.

## Description

### TECHNICAL FIELD

Examples of apparatus for selective delivery of pressurised gas are disclosed, particularly although not exclusively in relation to selective delivery of pressurised gas obtained from the core of a gas turbine engine.

### BACKGROUND

A gas turbine engine may have one or more bleed valves comprised in a system or arrangement which allows high pressure air to be obtained from the core of the engine as needed in order to operate systems requiring compressed or pressurised air input. In the case of an aero engine, compressed air is needed to operate auxiliary systems of an aircraft comprising the aero engine.

Conventionally, a bleed valve is located outside the core (for example it may be attached to the exterior of the core) and is coupled to the interior of the core by a connecting duct or stub pipe coupling an output port of the casing of the core to the input port of the bleed valve. The output port in the core casing may for example be located immediately downstream of one of the compressor stages of the engine. Bleed valves are kept closed when an engine is operated at high thrust (for example during aircraft take-off) in order to protect the auxiliary systems from excessively high pressures and temperatures generated in the engine core. When a bleed valve is closed, the pressure within a connecting duct or stub pipe coupling the engine core to the bleed valve, and within the valve itself up to the sealing line of the valve, is the same as the pressure within the engine core at the position of the output port in the core casing. The bleed valves are opened during phases of the engine cycle when the engine is operated at moderate or low thrust.

Such an arrangement is vulnerable to failure by rupturing of the connecting duct or stub pipe and by failure of an interface between one end of the duct or pipe and either the input port of the bleed valve or the output port of the core casing, when the engine is operated at high thrust conditions. In the event of such a failure, hot, high-pressure air escapes from the engine core into the space between the engine core casing and the core cowling, thereby damaging components located in that space.

### BRIEF SUMMARY

According to a first aspect, apparatus for selective delivery of pressurised gas comprises a containment wall which at least partially bounds of a volume of pressurised gas during use of the apparatus, the apparatus further comprising a valve having a valve body containing a valve mechanism, the valve body being directly coupled to an output port of the containment wall such that the containment wall and the valve retain the pressurised gas when the valve is closed.

The output port may comprise a portion of the containment wall which extends outwardly from the remainder of the containment wall with respect to the volume of pressurised gas. The output port may further comprise an additional hollow element coupled to the outwardly-extending portion of the containment wall. The cross-sectional area of the output port may increase as a function of distance from a part of the containment wall not comprised in the output port.

Alternatively, the output port may comprise a portion of the containment wall which extends inwardly from the remainder of the containment wall with respect to the volume of pressurised gas.

Alternatively, the output port may be an aperture in the containment wall.

The valve may be located at least partially within the output port. The sealing line of the valve mechanism may be located within the output port.

The apparatus may comprise an output duct coupled to the valve body on a side thereof remote from the output port.

The containment wall may be a compressor casing wall or a turbine casing wall of a gas turbine engine.

According to a second aspect, a gas turbine engine comprises apparatus according to the first aspect.

According to a third aspect, an aircraft comprises a gas turbine engine according to the second aspect.

Except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments are described below by way of example only, with reference to the figures in which:
- Figure 1: is a longitudinal section of a known, geared, gas turbine engine;
- Figure 2: is a detailed longitudinal section of an upstream portion of the Figure 1 engine;
- Figure 3: shows a side view of known apparatus comprised in the Figure 1 engine for selective delivery of compressed air;
- Figure 4: shows a longitudinal section of the Figure 3 apparatus;
- Figure 5: shows a side view of apparatus according to an example for selective delivery of compressed air;
- Figure 6: shows a longitudinal section of the Figure 5 apparatus; and
- Figures 7 to 12: show further example apparatus for selective delivery of compressed air.

### DETAILED DESCRIPTION

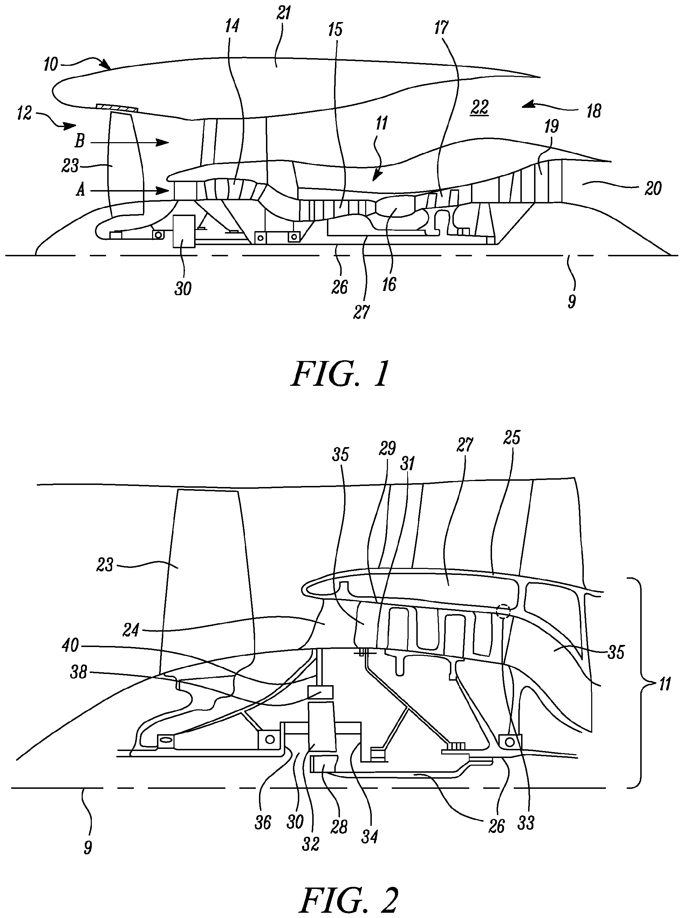

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

It will be appreciated that the arrangement shown in Figures 1 and 2 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations. Optionally, the gearbox may drive additional and/or alternative components (e.g. the intermediate pressure compressor and/or a booster compressor). The present disclosure also extends to gas turbine engines without a gearbox, for example an engine such as the engine 10 of Figures 1 and 2 in which gearbox 30 is omitted and fan 23 is driven directly by shaft 26.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

Referring to both Figures 1 and 2, the core 11 of the engine 10 has a core cowling 25, the outer surface of which forms the inner surface of the bypass duct 22. The gas annulus 35 of the core 11 in the portion of the engine 10 depicted in Figure 2 is defined by outer and inner compressor casing walls 29, 31 between which blades of the low pressure compressor 14 are located. Compressed (pressurised) air within the gas annulus 35 is retained by the outer and inner compressor casing walls 29, 31 during operation of the engine 10. The outer and inner compressor casing walls 29, 31 therefore act as containment walls for a volume of pressurised air between them. A space 27 defined by the outer compressor casing wall 29 and the core cowling 25 houses various other engine components. An output port in the outer compressor casing wall 29 is provided at a location 33 downstream of the low pressure compressor 14 for the purpose of bleeding off compressed air selectively, that is as required or necessary (under human or automatic control) to operate certain auxiliary systems of an aircraft comprising the engine 10.

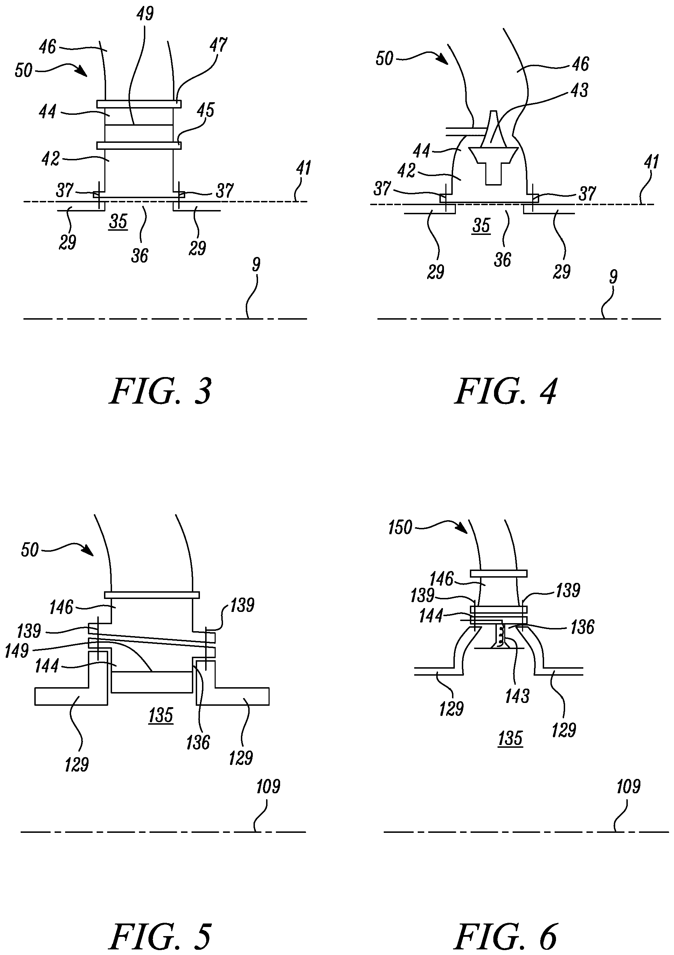

Figures 3 and 4 show conventional apparatus 50 comprised in the engine 10 for selective delivery of compressed air derived from the downstream end of the low pressure compressor 14 via the output port 36 in the compressor casing outer wall 29 at the location 33. The output port 36 is an aperture in the compressor casing outer wall 29. A stub pipe 42 is attached to the exterior of the compressor casing outer wall 29 at the output port 36 by means of bolts 37. The stub pipe 42 is coupled to the input of a valve 44 by an attachment feature 45. The output of valve 44 is coupled to an output duct 46 by an attachment feature 47. When the valve 44 is open, compressed within the gas annulus 35 passes to the output duct 46, providing compressed air input to one or more auxiliary aircraft systems (not shown). When the valve 44 is closed, air within the stub pipe 42 and within the valve 44 up to its sealing line 49 (i.e. the sealing position of a valve mechanism 43 contained within the valve body of the valve 44) is at the same pressure as air within the gas annulus 35. The valve 44 may have only two states, i.e. fully open and fully closed, or alternatively it may allow the rate of throughput of air to be controlled when it is operated. The valve 44 is located radially outwardly of the output port 36 with respect to the axis 9.

Under certain engine operating conditions, for example at aircraft take-off, the pressure and temperature of air in the gas annulus 35 at the position 33 may be very high. With the valve 44 in its closed configuration, the stub pipe 42 may rupture under such conditions, or the interface between the stub pipe 42 and the compressor casing outer wall 29 may fail, or the interface between the stub pipe 42 and the input of the valve 44 may fail. A combination of two or more of these failure modes may occur simultaneously. One or more such failures will result in the escape of hot, high-pressure air from the gas annulus 35 into the space 27, damaging engine components located therein. Systems may be provided in the engine 10 to detect such failures and to cut off the engine's fuel supply in response; however such systems interfere with engine operation and add complexity to the engine 10.

Figures 5 and 6 show apparatus 150 according to an example for selective delivery of pressurised air obtained from the gas annulus 135 of an engine having a compressor with an outer compressor casing wall 129 which partly defines the gas annulus 135. A valve 144 comprising a valve body containing a valve mechanism 143 with a sealing line 149 is coupled directly to the exterior of the compressor casing outer wall 129 substantially within an output port 136 thereof which is formed by a portion of the compressor casing outer wall 129 which extends radially outwardly from the remainder of the compressor casing outer wall, with respect to the principal rotation axis 109 of the engine. The output port 136 thus extends outwardly with respect to a volume of pressurised air in the gas annulus 135 retained by outer and inner compressor casing walls of the engine. The output port 136 may for example be located at the downstream end of the compressor. The valve 144 is substantially contained within the output port 136. An output duct arrangement 146 is coupled to the output of the valve 144. A pair of bolts 139 attaches the duct arrangement 146 to the valve 144, and the valve 144 to the compressor casing outer wall 129. The sealing line 149 of the valve mechanism 143 of the valve 144 is located within the output port 136. The input of the valve 144 is thus in direct fluid communication with the gas annulus 135, obviating the need for a connecting duct coupling the output port 136 to the valve 144, as is the case in the apparatus 50 of Figures 3 and 4. The possibility of rupturing of such a duct is therefore removed. In addition, a single interface between the valve 144 and the compressor casing outer wall 129 replaces two interfaces in the arrangement of Figures 3 and 4; a first between a first end of connecting duct 42 and the valve 44 and a second between a second end of the duct 42 and the compressor casing outer wall 29.

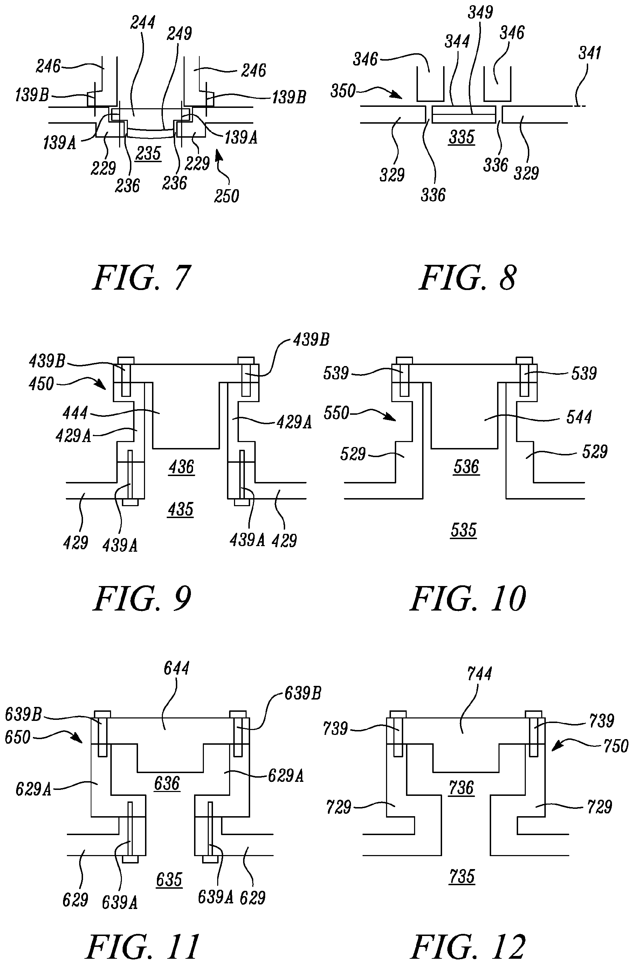

Figure 7 shows a second example apparatus 250 for selective delivery of compressed air, in which a valve 244 is coupled directly to an output port 236 in the compressor casing outer wall 229 of a gas turbine engine. The output port 236 is formed by a portion of the wall 229 which extends radially inwardly with respect to the principal rotational axis of the engine (not shown), and forms a recessed step for accommodating the valve 244. Bolts 139A fix the valve 244 to the compressor casing outer wall 229. An output duct 246 is attached to the exterior of the compressor casing outer wall 229 by bolts 139B. The valve 244 is located substantially entirely within the output port 236, and the sealing line 249 is therefore also located within the output port 236. When the valve 244 is opened, compressed air from the gas annulus 235 passes into the output duct 246 via the valve 244. The output port 236 thus extends inwardly with respect to a volume of pressurised air produced in the gas annulus 135, the volume being partly bounded and retained by the compressor casing outer wall 229.

Figure 8 shows a third example apparatus 350 in which an output port 336 in a compressor casing outer wall 329 of a gas turbine engine takes the form of a simple aperture which is occupied by a valve 349. An output duct 346 is coupled to the exterior of the compressor casing outer wall 329 to provide a seal between the valve 344 and the compressor casing outer wall 329 at the position of the output port 336.

Figures 9 to 12 show portions of fourth to seventh example apparatus 450, 550, 650, 750 respectively for selective delivery of compressed air. Parts of the apparatus 450, 550, 650, 750 of Figures 9 to 12 are labelled with reference numerals differing by 300, 400, 500 and 600 respectively from reference numerals labelling corresponding parts in Figures 5 and 6.

With reference to Figure 9, an output port 436 in a compressor casing outer wall 429 is formed by a radially outwardly extending portion of the wall 429 and an additional, separate, hollow cylindrical component 429A which is attached to the outwardly-extending portion of wall 429 by bolts 441 and to which a valve 444 is attached by means of bolts 443. An output duct (not shown) may be attached to the valve 444 on a side thereof remote from the output port 436. The hollow cylindrical component 429A is an extension of the outwardly-extending portion of the wall 429 and may be permanently attached to that portion, for example by welding, so that it is integrated with the wall 429.

Figure 10 shows apparatus 550 similar to the apparatus 450 of Figure 5, in which a radially outwardly-extending output port 536 is formed entirely by a radially-outwardly extending portion of a compressor casing outer wall 529.

The apparatus 450 of Figure 9 may be more economical to manufacture than the apparatus 550 of Figure 10 for a given output port length because the compressor casing outer wall 429 may be cheaper and easier to forge due to the shorter radially outwardly extending portion of the wall 429 compared to that of the wall 529.

Figures 11 and 12 show apparatus 650, 750 similar to the apparatus 450, 550 of Figures 9 and 10 respectively, except that the output ports 636, 736 each increase in diameter and cross-sectional area in the radial direction away from gas annuli 635, 735 (i.e. as a function of distance from parts of the compressor casing outer walls 629, 729 which partly define gas annuli 635, 735). Specifically, the output ports 636, 736 each exhibit a stepwise increase in diameter and cross-sectional area at a particular distance from the exterior of the main (non-port) portions of the compressor casing outer walls 629, 729. This allows the effective cross-sectional area for gas passing through the output ports 636, 736 and valves 636, 736 to remain constant or substantially constant as a function of radial position.

The valves 144, 244, 344, 444, 544, 644, 744 in Figures 5 to 12 are all modular; each comprises valve body housing a valve mechanism. In the event of failure of a valve the entire valve is replaced, providing for simple maintenance of apparatus comprising the valve.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. Apparatus (150; 250; 350; 450; 550; 650; 750) for selective delivery of pressurised gas, the apparatus comprising a containment wall (129; 229; 329; 429; 529; 629; 729) which at least partially bounds of a volume of pressurised gas during use of the apparatus, the apparatus further comprising a valve (144; 244; 344; 444; 544; 644; 744) having a valve body containing a valve mechanism (143), the valve body being directly coupled to an output port (136; 236; 336; 436; 536; 736) of the containment wall such that the containment wall and the valve retain the pressurised gas when the valve is closed.

2. Apparatus (150; 450; 550; 650; 750) according to claim 1 wherein the output port comprises a portion of the containment wall (129; 429; 529; 629; 729) which extends outwardly from the remainder of the containment wall with respect to the volume of pressurised gas.

3. Apparatus (450; 650) according to claim 2 wherein the output port further comprises an additional hollow element (429A; 629A) coupled to the outwardly-extending portion of the containment wall.

4. Apparatus (650; 750) according to claim 2 or claim 3 wherein the cross-sectional area of the output port (636; 736) increases as a function of distance from a part of the containment wall not comprised in the output port.

5. Apparatus (250) according to claim 1 wherein the output port (236) comprises a portion of the containment wall (229) which extends inwardly from the remainder of the containment wall with respect to the volume of pressurised gas.

6. Apparatus (350) according to claim 1 wherein the output port (336) is an aperture in the containment wall (329).

7. Apparatus according to any preceding claim wherein the valve body is located at least partially within the output port.

8. Apparatus according to claim 7 wherein the sealing line (149; 249; 349) of the valve mechanism is located within the output port.

9. Apparatus according to any preceding claim comprising an output duct (146; 246; 346) coupled to the valve body on a side thereof remote from the output port.

10. Apparatus according to any preceding claim wherein the containment wall is a compressor casing wall or a turbine casing wall of a gas turbine engine.

11. A gas turbine engine comprising apparatus according to any preceding claim.

12. An aircraft comprising a gas turbine engine according to claim 11.
